# EUROPÄISCHE PATENTSCHRIFT

(11) **EP 0 527 405 B1**
(45) Veröffentlichungstag und Bekanntmachung des Hinweises auf die Patenterteilung: **18.03.1998**
(21) Anmeldenummer: 92113146.2
(22) Anmeldetag: 01.08.1992
(51) Int. Cl.: F16C 25/08, B41F 13/28

(54) **Dreiringwälzlager für die Zapfen der Zylinder von Druckmaschinen**
Triple-ring rolling contact bearing for the cylinder trunnions of printing machines
Palier à contact de roulement à trois bagues pour les tourillons des cylindres d'imprimeuses

(30) Priorität: 10.08.1991 DE 4126545
(43) Veröffentlichungstag der Anmeldung: 17.02.1993
(73) Patentinhaber: M.A.N.-ROLAND Druckmaschinen Aktiengesellschaft, 63012 Offenbach (DE)
(72) Erfinder: Mathes, Josef, W-6050 Offenbach/Main (DE)
(74) Vertreter: Marek, Joachim, Dipl.-Ing.

(56) Entgegenhaltungen:
- DE-A- 1 400 319
- DE-A- 3 324 811
- DE-A- 3 635 569
- DE-C- 471 572
- GB-A- 2 136 092

## Beschreibung

Die Erfindung betrifft eine Dreiringwälzlageranordnung für die Zapfen der Zylinder von Druckmaschinen, insbesondere für die Zapfen von Gummituchzylindern, nach dem Oberbegriff des ersten Patentanspruches.

Lagerungen für die Zapfen von Gummituchzylindern in Druckmaschinen müssen so ausgelegt sein, daß der Gummituchzylinder exzentrisch verstellbar ist, damit er zu einem weiteren Zylinder an- und abstellbar ist. Außerdem ist es erforderlich, daß derartige Wälzlagerungen in radialer Richtung völlig spielfrei sind und in axialer Richtung genügend starr ausgebildet werden, da sich sonst Fehldrucke ergeben.

Dreiringwälzlager mit radial ineinander liegenden, axial und/oder radial gegeneinander verspannten Lagerringen, zwischen denen Wälzlagerreihen angeordnet sind, sind z.B. aus der DE-A-1 400 319 und der DE-A-3 643 295 bekannt.

Zur exzentrischen Verstellung oder Verschiebung der Zylinder werden diese Wälzlager mit einem exzentrischen Zwischenring, d.h. mit einem Ring versehen, der mit zueinander exzentrischen Innen- und Außenlaufbahnen versehen ist. Durch Fluchtungsfehler der Bohrung im Gestell kann es zum Verkanten des Zylinderzapfens kommen. Den genannten Veröffentlichungen ist nicht zu entnehmen, ob sie zum Ausgleich der Fluchtungsfehler ausreichend radial vorspannbar sind und eine selbsttätige Ausrichtung des Lagers zum Lagerzapfen gestatten.

Ferner ist es aus der DE-A-3 324 811 bekannt, für eine Wälzlagerung der Zapfen von Gummituchzylindern in Druckmaschinen separate Radial- und Axiallager vorzusehen, um die Steifigkeit der Wälzlagerung zu erhöhen. Diese Wälzlagerung erlaubt keinen Ausgleich der Fluchtungsfehler der Bohrung im Gestell, weil das Lager durch seine Zentrierung im Maschinengestell in seiner Lage vorbestimmt ist und seine selbsttätige Ausrichtung zum Lagerzapfen nicht gewährleistet ist.

Zum Ausgleich von Fluchtungsfehlern ist es aus der DE-A-3 635 569 bekannt, mindestens die äußere Kontur eines äußeren Lagerringes eines Zylindergleitlagers zu einer Pendelfläche umzubilden, wobei der äußere Lagerring des Außenlagers und ein innerer Lagerring des Innenlagers exzentrisch ausgebildet sind, so daß die doppeltexzentrische spielfreie Gleitlagerung sich zum Zapfen des Zylinders selbsttätig ausrichten kann.

Aufgabe der Erfindung ist es, für Zylinder von Druckmaschinen eine Wälzlagerung zu schaffen, die bei hoher Steifigkeit Fluchtungsfehler der Bohrung im Gestell und evtl. Durchbiegungen ausgleicht.

Gelöst wird diese Aufgabe durch die im ersten Patentanspruch aufgeführten Merkmale. Weiterbildungen ergeben sich aus den Unteransprüchen.

Durch Trennung in separate Radiallager und Axiallager, die in axialer und radialer Richtung verspannbar sind, entsteht ein Dreiringwälzlager hoher Steifigkeit, das Bohrungsfluchtungsfehler ausgleicht und sich selbsttätig zum Lagerzapfen ausrichtet.

Die Erfindung wird nachstehend anhand zweier Zeichnungen in einem Ausführungsbeispiel näher erläutert.

Es zeigt:

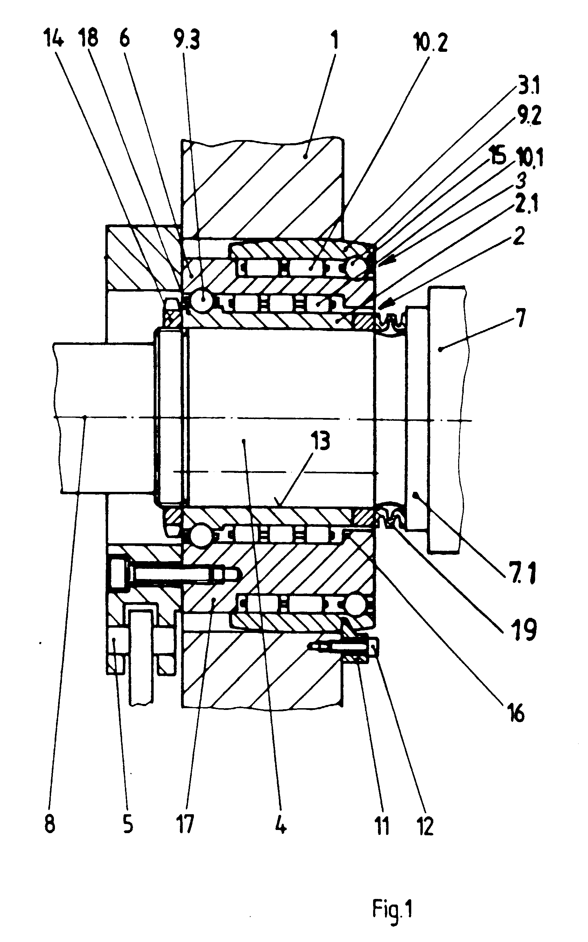

- Fig. 1: ein erfindungsgemäßes Dreiringwälzlager im Längsschnitt, mit Kugellager zur axialen Abstützung.

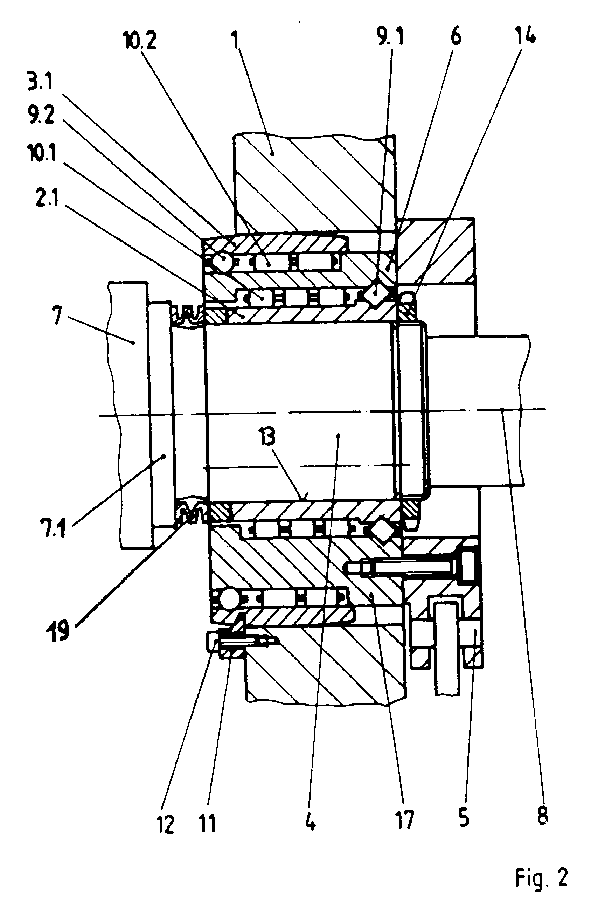

- Fig. 2: ein erfindungsgemäßes Dreiringwälzlager im Längsschnitt, mit Kreuzrollenaxiallager zur axialer Abstützung.

Das Dreiringwälzlager besteht aus einem mit einem Zapfen 4 eines Gummituchzylinders 7 verbundenen inneren Lagerring 2.1 des Innenlagers 2, der mit einer zum Zapfen 4 konzentrischen äußeren Laufbahn versehen ist.

Das Dreiringwälzlager weist ferner in einem Lagergehäuse 1 einen äußeren Lagerring 3.1 eines äußeren Lagers 3 auf, der mit einer zur Bohrung des Lagergehäuses 1 konzentrischen inneren Laufbahn versehen ist.

Zwischen innerem Lagerring 2.1 und äußerem Lagerring 3.1 ist ein die Laufbahn für das innere Lager 2 und äußere Lager 3 tragender, einteiliger exzentrischer Zwischenring 6 vorgesehen, der durch außerhalb des Lagergehäuses 1 liegende Betätigungsmittel 5 in Umfangsrichtung schwenkbar ist.

Zur radialen Abstützung sind zwischen dem mit dem Zapfen 4 verbundenen inneren Lagerring 2.1 und dem exzentrischen Zwischenring 6 einerseits und zwischen dem äußeren Lagerring 3.1 und dem exzentrischen Zwischenring 6 andererseits Zylinderrollenlagerreihen 10.1, 10.2 vorgesehen, wobei neben der Zylinderrollenlagerreihe 10.1 an mindestens einem axialen Ende Kugellagerreihen 9.3 oder vergleichbare Axiallagerreihen z. B. Kreuzrollenaxiallager 9.1 zur getrennten Aufnahme von axialen Kräften angeordnet sind.

Zur Aufnahme der Wälzlagerreihen 9, 10 sind an den Lagerringen 2.1, 3.1, 6 an mindestens einem axialen Ende bohrungs- und/oder mantelseitig gegeneinander gerichtete Absätze 15 bis 18 vorgesehen. Außerdem sind die drei Lagerringe 2.1, 3.1, 6 durch Mittel 11 bis 18 axial und radial gegeneinander verspannt.

Der äußere Lagerring 3.1 und der exzentrische Zwischenring 6 werden durch versetzt angeordnete, in Nuten des äußeren Lagerringes 3.1 senkrecht zur Lagermittelachse 8 angeordnete, formschlüssig mit dem äußeren Lagerring 3.1 verbundene Keile 11 axial gehalten, wobei die Keile 11 in Umfangsrichtung, z.B. 120° versetzt, koaxial zur Bohrung im Gestell, durch Schrauben 12 in axialen Bohrungen am Lagergehäuse 1 befestigt sind.

Der innere Lagerring 2.1, der exzentrische Zwischenring 6 und der Zapfen 4 sind mittels einer Stellmutter 14 oder nicht näher dargestellten Stellschrauben oder dergleichen gegenseitig und gegen das Außenlager 3 verspannt.

Die vorgeschlagene Ausbildung ermöglicht es, den exzentrischen Zwischenring 6 spiel- und reibungsfrei um einen vorgegebenen Winkel zu verschwenken, um den Gummituchzylinder an einen weiteren Zylinder an- oder abzustellen.

Die Starrheit des Dreiringwälzlagers ist durch die getrennte Anordnung von Radial- und Axiallagerreihen gewährleistet. Geringe Verformungs- und Fluchtungsfehler können ausgeglichen werden, da sich die Lagerringe 2.1, 3.1, 6 im Zusammenwirken der Keile 11 in axialer und radialer Richtung ohne schädliche Kraft verspannen lassen.

Soll ein Ausgleich größerer Bohrungsfluchtungsfehler erfolgen, sind zusätzliche Maßnahmen vorzusehen.

Beispielsweise kann der äußere Lagerring 3.1 außen eine leicht ballige Fläche aufweisen und der Keil 11 unter Vorspannung einer Feder stehen. Als Feder sind z.B. Tellerfederpakete, Schraubenfedern oder der Keil 11 selbst einsetzbar. Die dabei auftretenden axialen Kippkräfte haben keinen nennenswerten Einfluß auf die radial relativ starre Lagereinheit. Zur Erhöhung oder Verringerung der Lagervorspannung ist der innere Lagerring 2.1 und der Zapfen 4 mit kegeligen Wirkflächen 13, z.B. 1:50, an den einander zugewandten Oberflächen versehen. Über die Stellmutter 14 und die eine Gegenkraft erzeugende Feder 19, die zwischen Zylinderschulter 7.1 und innerem Lagerring 2.1 angeordnet ist, ist der Lagerring 2.1 verschiebbar und das Lagerspiel einstellbar. Hydraulischer Druck in Verbindung mit Ölnuten erleichtert das Verschieben.

Es ist selbstverständlich auch denkbar, die aus dem Stand der Technik bekannten Maßnahmen an Gleitlagerungen bzw. Wälzlagerungen zu ergänzen, welche Abweichungen von der Lagergeometrie (Winkelfehler) ausgleichen, z.B. Verringerung der Abstützbreite der Lagerringe, Verringerung der Lagerbreite, Kippbeweglichkeit der Lagerringe durch Kippen um eine Kante, verschiedene Ausführungen von Kippsegmenten mit und ohne Federn usw..

### Bezugszeichenliste

- 1: Lagergehäuse
- 2: inneres Lager
- 2.1: innerer Lagerring
- 3: äußeres Lager
- 3.1: äußerer Lagerring
- 4: Zapfen
- 5: Betätigungsmittel
- 6: exzentrischer Zwischenring
- 7: Gummituchzylinder
- 7.1: Zylinderschulter
- 8: Lagermittelachse
- 9: Axiallagerreihe
- 9.1: Kreuzrollenaxiallagerreihe
- 9.2: Kugellagerreihe
- 9.3: Kugellagerreihen
- 10: Radiallagerreihe
- 10.1: Zylinderrollenlagerreihe
- 10.2: Zylinderrollenlagerreihe
- 11: Keil
- 12: Schraube
- 13: Kegelfläche
- 14: Stellmutter
- 15: Absatz
- 16: Absatz
- 17: Absatz
- 18: Absatz
- 19: Feder

## Patentansprüche

1. Dreiringwälzlageranordung für die Zapfen (4) der Zylinder von Druckmaschinen, insbesondere für die Zapfen (4) von Gummituchzylindern (7), mit einem die Laufbahn für ein inneres Lager (2) und ein äußeres Lager (3) tragenden exzentrischen Zwischenring (6), der durch außerhalb eines Lagergehäuses (1) liegende Betätigungsmittel (5) in Umfangsrichtung schwenkbar ist, und mit Lagerringen (2.1, 3.1, 6), die durch geeignete Mittel (11 bis 18) axial und radial gegeneinander verspannt sind, wobei zwischen den drei Lagerringen (2.1, 3.1, 6) Wälzlagerreihen (9, 10) angeordnet sind, dadurch gekennzeichnet, daß der einteilige, exzentrische Zwischenring (6) über eine äußere Zylinderrollenlagerreihe (10.2) und eine äußere Kugellagerreihe (9.2) mit dem äußeren Lagerring (3.1), sowie über eine innere Zylinderrollenlagerreihe (10.1) und eine innere Kugel- oder Kreuzrollenaxiallagerreihe (9.3; 9.1) mit dem inneren Lagerring (2.1) eine Lagereinheit bildet, daß der äußere Lagerring eine leichtballige Außenfläche aufweist, und daß die Lage des inneren Lagerrings (2.1) bestimmt ist durch eine zwischen einer Zylinderschulter (7.1) und der Stirnseite des inneren Lagerrings angeordneten Feder (19) und eine auf dem freien Zapfen (4) an der gegenüberliegenden Stirnseite des inneren Lagerrings (2.1) angeordnete Stellmutter (14), Stellschrauben oder dergleichen.

2. Dreiringwälzlageranordnung nach Anspruch 1, dadurch gekennzeichnet, daß deren Kreuzrollenaxiallagerreihen bzw. Kugellagerreihen (9.1; 9.3) an mindestens einem axialen Ende neben der Zylinderrollenlagerreihe (10.1) angeordnet sind.

3. Dreiringwälzlageranordnung nach Anspruch 1 und 2, dadurch gekennzeichnet, daß deren exzentrischer Zwischenring (6) und der Lagerring (3.1) durch in Umfangsrichtung versetzt angeordnete, in Nuten des äußeren Lagerringes (3.1) formschlüssig verbundene Keile (11) verspannt sind, die durch Schrauben (12) in axialen Bohrungen am Lagergehäuse (1) befestigt sind.

4. Dreiringwälzlageranordnung nach Anspruch 1 und 3, dadurch gekennzeichnet, daß deren drei Lagerringe (2.1, 3.1, 6) an mindestens einem axialen Ende zur Aufnahme der Wälzlagerreihen (9.1, 9.2, 9.3, 10.1, 10.2) bohrungs- und/oder mantelseitig mit gegeneinander gerichteten Absätzen (15 bis 18) versehen sind.

## Claims

1. Triple ring roller contact bearing arrangement for the trunnions (4) of cylinders of printing presses, particularly for the trunnions (4) of blanket cylinders (7), with an eccentric intermediate ring (6) carrying the running track for an inner bearing (2) and an outer bearing (3), which is swivellable by actuation means (5) lying outside a bearing housing (1) in the peripheral direction and with bearing rings (2.1, 3.1, 6) which are tensioned by suitable means (11 to 18) axially and radially against one another wherein between the three bearing rings (2.1, 3.1, 6) rows of roller bearings (9, 10) are arranged, characterised in that the one part eccentric intermediate ring (6) with the inner bearing ring (2.1) constitutes a bearing unit via an outer row of cylindrical roller bearings (10.2) and an outer row of ball bearings (9.2) with the outer bearing ring (3.1) as well as via an inner row of cylinder roller bearings (6.1) and an inner roller or cross-roll axial bearing row (9.3; 9.1) that the outer bearing ring has a slightly balled outer surface, and that the position of the inner bearing ring (2.1) is determined by a spring (19) arranged between a cylinder shoulder (7.1) and the end face of the inner bearing ring and an adjusting nut (14), adjusting screw or the like arranged on the free trunnion (4) against the oppositely lying end face of the inner bearing ring (2.1).

2. Triple-ring roller contact bearing arrangement according to Claim 1, characterised in that its cross roller axial bearing rows or ball bearing rows (9.1; 9.3) are arranged at at least one axial end adjacent the cylinder roller bearing row (10.1).

3. Triple-ring roller contact bearing arrangement according to Claim 1 and 2, characterised in that its eccentric intermediate ring (6) and the bearing ring (3.1) are tensioned by wedges (11) arranged offset in the peripheral direction and connected in positively engaged fashion in grooves of the outer bearing ring (3.1), which are fixed by screws (12) in axial bores to the bearing housing (1).

4. Triple-ring roller contact bearing arrangement according to Claim 1 and 3, characterised in that its three bearing rings (2.1, 3.1, 6) are provided on at least one axial end for receiving the roller bearing rows (9.1, 9.2, 9.3, 10.1, 10.2) on the side of the bore and/or the cover with steps (15 to 18) directed towards one another.

## Revendications

1. Dispositif à roulements à trois bagues pour les tourillons (4) des cylindres de machines d'impression, en particulier pour les tourillons (4) de cylindres porte-blanchet (7), comportant une bague intermédiaire (6) excentrique, portant la voie de roulement pour un palier interne (2) et un palier externe (3), et pouvant être pivotée en direction périphérique par des moyens d'actionnement (5) situés à l'extérieur d'un boîtier de palier (1), et des bagues de palier (2.1,3.1,6) qui sont tendues axialement et radialement les unes par rapport aux autres par des moyens appropriés (11 à 18), des rangées de roulements (9,10) étant agencées entre les trois bagues de palier (2.1,3.1,6),
caractérisé en ce que la bague intermédiaire (6) excentrique et en une seule pièce, forme, par l'intermédiaire d'une rangée externe de roulements à rouleaux cylindriques (10.2) et une rangée externe de roulements à billes (9.2), avec la bague de palier externe (3.1), ainsi que par l'intermédiaire d'une rangée interne de roulements à rouleaux cylindriques (10.1) et une rangée interne de roulements axiaux à rouleaux croisés (9.3;9.1), avec la bague de palier interne (2.1), une unité de palier, en ce que la bague de palier externe présente une face externe légèrement bombée, et en ce que la position de la bague de palier interne (2.1) est déterminée par un ressort (19) agencé entre un épaulement cylindrique (7.1) et la face frontale de la bague de palier interne, et un écrou de réglage (14), des vis de réglage ou analogue, agencé sur le tourillon libre (4) sur la face frontale opposée de la bague de palier interne (2.1).

2. Dispositif à roulements à trois bagues selon la revendication 1,
caractérisé en ce que ses rangées à roulements axiaux à rouleaux croisés ou ses rangées à roulements à billes (9.1;9.3) sont agencées à au moins une extrémité axiale, à côté de la rangée de roulements à rouleaux cylindriques (10.1).

3. Dispositif à roulements à trois bagues selon l'une des revendications 1 et 2,
caractérisé en ce que sa bague intermédiaire excentrique (6) et la bague de palier (3.1) sont tendues par des clavettes (11) agencées de façon décalée en direction périphérique, reliées de façon clabotée dans des gorges de la bague de palier externe (3.1) et fixées par des vis (12) dans des perçages axiaux du boîtier de palier (1).

4. Dispositif à roulements à trois bagues selon l'une des revendications 1 et 3,
caractérisé en ce que ses trois bagues de palier (2.1,3.1,6) sont munies, à au moins une extrémité axiale, pour la réception des rangées de roulements (9.1,9.2, 9.3,10.1,10.2), sur la face de perçage et/ou la face d'enveloppe, de gradins (15 à 18) orientés les uns vers les autres.
